# FASCICULE DE BREVET EUROPEEN

(11) **EP 3 920 552 B1**
(45) Date de publication et mention de la délivrance du brevet: **13.09.2023**
(21) Numéro de dépôt: 21175742.2
(22) Date de dépôt: 25.05.2021
(51) Int. Cl.: H04R 5/04, H04S 1/00, H04R 3/12

(54) **TRAITEMENT CENTRALISE D'UN FLUX AUDIO D'ENTREE**
ZENTRALISIERTE VERARBEITUNG EINES EINGANGS-AUDIODATENSTROMS
CENTRALISED PROCESSING OF AN INPUT AUDIO STREAM

(30) Priorité: 02.06.2020 FR 2005773
(43) Date de publication de la demande: 08.12.2021
(73) Titulaire: SAGEMCOM BROADBAND SAS, 92500 Rueil-Malmaison (FR)
(72) Inventeur: BERGER, Jérôme, 92500 RUEIL MALMAISON (FR); BOUVIGNE, Gabriel, 92500 RUEIL MALMAISON (FR); DELPLACE, Stéphane, 92500 RUEIL MALMAISON (FR); SODI, Frédéric, 92500 RUEIL MALMAISON (FR)
(74) Mandataire: Lavaud, Thomas

(56) Documents cités:
- US-A1- 2005 190 928
- US-A1- 2016 212 534
- US-B1- 9 763 280

## Description

L'invention concerne le domaine des installations multimedia domestiques.

### ARRIERE PLAN DE L'INVENTION

Les installations multimedia domestiques modernes comportent couramment différents types d'équipements qui intègrent un ou plusieurs dispositifs de restitution audio comprenant chacun un haut-parleur.

Ces équipements sont par exemple des enceintes amplifiées, pouvant recevoir des flux audio par le biais de protocoles réseau. Ces enceintes peuvent être des enceintes connectées autonomes (ou *smartspeaker*), possédant des capacités avancées de traitement interne, mais aussi parfois des enceintes plus simples, comme par exemple des enceintes *Bluetooth* destinées à être pilotées par un autre équipement tel qu'un *smartphone* par exemple.

Il existe aujourd'hui de nombreuses possibilités permettant d'améliorer la restitution sonore d'un système audio intégrant ces enceintes.

Ainsi, certaines de ces enceintes offrent la possibilité d'être groupées dans une même pièce afin d'améliorer l'expérience acoustique de l'utilisateur, notamment par le biais d'une restitution sonore multicanaux. Les documents US 2005/190928 A1, US 2016/212534 A1 et US 9 763 280 B1 divulguent de tels systèmes de restitution sonore distribués, qui comprennent un élément maître mettant en œuvre une chaîne de traitement adaptée à chaque voie de restitution.

Lorsque plusieurs enceintes sont intégrées dans un même groupe sonore, il peut être souhaitable de modifier leur rendu sonore individuel, afin de tirer parti du fait que plusieurs enceintes sont utilisées simultanément. Il est par exemple envisagé de permettre à des enceintes d'appliquer des paramètres d'égalisation différents lorsqu'elles sont utilisées seules ou lorsqu'elles sont intégrées dans un groupe. Bien sûr, ceci suppose que les enceintes disposent de la capacité de traitement nécessaire à l'application des traitements adéquats lorsqu'elles sont groupées, et donc d'une puissance de calcul importante. Cette puissance de calcul est souvent inutilisée, ou utilisée de façon plus restreinte, lorsque ce type d'enceinte est utilisé de manière isolée. Par exemple, il est fréquent qu'une enceinte n'utilise pas d'égalisation, ou une égalisation simplifiée, lorsqu'elle est utilisée seule, mais que le même modèle d'enceinte applique une égalisation plus complexe au signal lorsqu'elle est regroupée dans une paire d'enceintes, par exemple pour répartir différemment le rendu des basses fréquences ou pour effectuer un *downmix* plus complexe.

De même, certaines enceintes sont capables d'appliquer des effets de spatialisation, qui sont logiquement absents lorsque l'enceinte est utilisée seule. Dans ce cas, une enceinte recevant un flux audio stéréo se contentera de réaliser un *downmix* monophonique lorsqu'elle est utilisée seule, alors qu'une fois groupées en paire, les enceintes peuvent éventuellement appliquer des traitements complexes de modification de la spatialisation.

Mais les équipements qui intègrent un ou plusieurs dispositifs de restitution audio ne sont pas nécessairement des enceintes. Ainsi, les boîtiers décodeurs (ou *set-top box)* présents chez les utilisateurs sont progressivement enrichis de fonctions audio avancées, avec par exemple des capacités de reproduction sonore par le biais de haut-parleurs directement intégrés dans le boîtier décodeur, et la capacité de piloter des enceintes reliées par une liaison sans fil. Les enceintes en question doivent bien sûr avoir été prévues pour ce type d'usage, et intégrer des capacités de traitement nécessaires à la reproduction correcte d'environnements multicanaux tels que rencontrés dans ces configurations.

Tous les traitements qui viennent d'être décrits impliquent donc d'utiliser des enceintes qui doivent avoir été spécialement conçues pour mettre en oeuvre ces traitements. Un utilisateur qui est déjà en possession d'enceintes doit donc remplacer ses enceintes actuelles par des enceintes récentes pour pouvoir bénéficier de ces traitements et de l'amélioration de la restitution sonore. Ces enceintes récentes doivent disposer d'une capacité de traitement importante et sont donc coûteuses. Par ailleurs, comme on l'a évoqué plus tôt, la puissance de calcul de ces enceintes récentes est en grande partie inutilisée lorsque les enceintes sont utilisées seules, de sorte que l'augmentation du prix de l'enceinte n'est alors plus justifiée.

### OBJET DE L'INVENTION

L'invention a pour objet d'améliorer la restitution sonore dans un système audio comportant une pluralité d'équipements, sans augmenter le coût du système audio et sans prérequis sur la conception des équipements.

### RESUME DE L'INVENTION

En vue de la réalisation de ce but, on propose un dispositif de traitement tel que défini par la revendication 1.

Le dispositif de traitement selon l'invention permet d'appliquer sur le flux audio d'entrée des chaînes de traitements (égalisation, effets, répartition des voies, etc.) de manière à produire des flux audio traités adaptés chacun à l'une des voies de restitution. On améliore ainsi très nettement la restitution sonore dans le système audio. Les flux audio traités sont donc générés et restitués par les équipements alors même que tous les équipements (sauf celui ou ceux qui intègrent l'élément maître et l'élément configurateur) ne sont pas nécessairement prévus initialement pour appliquer de tels traitements.

L'élément maître est en charge de tous les calculs nécessaires pour transformer le flux audio d'entrée en plusieurs flux audio traités qui sont envoyés pour diffusion aux équipements (qui sont généralement des enceintes) intégrant les dispositifs de restitution audio, sans que lesdits équipements n'aient à modifier eux-mêmes le flux audio d'entrée.

Ainsi, il est possible d'utiliser des enceintes moins coûteuses dans des configurations spéciales avancées, et de préserver l'évolutivité du système audio, les enceintes pouvant être utilisées dans des configurations non connues au moment de leur mise au point initiale.

On propose de plus un dispositif de traitement tel que précédemment décrit, dans lequel la chaîne de traitements associée et adaptée à une voie de restitution met en oeuvre des traitements comprenant la création d'un flux audio particulier adapté à ladite voie de restitution, et/ou une égalisation et/ou un ajustement dynamique d'un gain et/ou un ajustement d'un volume relatif mis en œuvre sur le flux audio particulier pour produire le flux audio traité adapté à ladite voie de restitution.

On propose de plus un dispositif de traitement tel que précédemment décrit, dans lequel les premières caractéristiques du flux audio d'entrée comprennent un nombre de voies sources du flux audio d'entrée et une configuration spatiale du flux audio d'entrée.

On propose de plus un dispositif de traitement tel que précédemment décrit, dans lequel les deuxièmes caractéristiques des dispositifs de restitution audio comprennent des informations de restitution relatives à des capacités acoustiques des dispositifs de restitution audio et à une configuration spatiale des voies de restitution.

On propose de plus un dispositif de traitement tel que précédemment décrit, dans lequel les informations de restitution sont acquises par l'élément configurateur via une interface de programmation applicative coopérant avec une base de données préremplie, ou via une réception de messages dédiés émis par les équipements intégrant lesdits dispositifs de restitution audio, ou bien sont transmises à l'élément configurateur par l'élément maître.

On propose de plus un équipement comprenant un dispositif de traitement tel que précédemment décrit.

On propose de plus un équipement tel que précédemment décrit, l'équipement étant un boîtier décodeur.

On propose de plus un système audio comportant une pluralité d'équipements intégrant des dispositifs de restitution audio comprenant chacun un haut-parleur, le système audio comprenant un dispositif de traitement tel que précédemment décrit, qui est mis en oeuvre par au moins deux équipements distincts.

On propose de plus un système audio tel que précédemment décrit, dans lequel les au moins deux équipements distincts comprennent un équipement maître dans lequel est mis en oeuvre l'élément maître et un équipement configurateur dans lequel est mis en oeuvre l'élément configurateur.

On propose de plus un système audio tel que précédemment décrit, dans lequel les au moins deux équipements distincts comprennent au moins deux équipements maître dans chacun desquels est mis en oeuvre un élément maître.

On propose de plus un procédé de traitement tel que défini par la revendication 11.

On propose de plus un programme d'ordinateur comprenant des instructions qui conduisent le dispositif de traitement tel que précédemment décrit à exécuter les étapes du procédé de traitement tel que précédemment décrit.

On propose de plus un support d'enregistrement lisible par ordinateur, sur lequel est enregistré le programme d'ordinateur tel que précédemment décrit.

On propose de plus un système audio tel que défini dans la revendication 14.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés, parmi lesquels :
[Fig. 1] la figure 1 représente un service de diffusion du *cloud,* et deux enceintes connectées ;
[Fig. 2] la figure 2 représente un boîtier décodeur relié à un écran, et deux enceintes externes ;
[Fig. 3] la figure 3 représente l'élément maître et deux enceintes externes ;
[Fig. 4] la figure 4 représente l'élément maître et l'élément configurateur ;
[Fig. 5] la figure 5 représente un boîtier décodeur relié à un écran, et quatre enceintes externes ;
[Fig. 6] la figure 6 représente un boîtier décodeur relié à un écran, et quatre enceintes externes.

### DESCRIPTION DETAILLEE DE L'INVENTION

On décrit tout d'abord le principe général de l'invention.

Un système audio, dans lequel est mise en oeuvre l'invention, comporte une pluralité d'équipements intégrant des dispositifs de restitution audio. Un « dispositif de restitution audio » comprend un haut-parleur et des moyens de mise en forme d'un signal audio transmis audit haut-parleur pour être restitué (lesdits moyens de mise en forme pouvant être communs à plusieurs dispositifs de restitution audio au sein d'un même équipement). Les dispositifs de restitution audio sont intégrés dans la pluralité d'équipements : tous les équipements du système audio ne comportent pas nécessairement de dispositif de restitution audio, alors que certains équipements peuvent en comporter plusieurs.

Les dispositifs de restitution audio du système audio sont agencés pour former une pluralité de voies de restitution (voies spatiales).

Le système audio intègre un dispositif de traitement comprenant un élément maître et un élément configurateur. Le dispositif de traitement est mis en oeuvre dans un ou plusieurs des équipements du système audio.

L'élément maître acquiert un flux audio d'entrée, qui provient d'une source quelconque : service *cloud* (que l'on peut traduire par « nuage »), réseau local, *broadcast* (que l'on peut traduire par « radiodiffusion »), etc.

L'élément maître a connaissance grâce à l'élément configurateur de la configuration de reproduction sonore et/ou des caractéristiques acoustiques des équipements comprenant les dispositifs de restitution audio (et donc les haut-parleurs).

L'élément maître applique les calculs et traitements nécessaires afin d'obtenir des flux audios traités adaptés chacun à une voie de restitution. L'élément maître produit donc n flux audio traités pour n voies de restitution. L'élément maître transmet à chaque équipement comprenant un dispositif de restitution audio le flux audio traité adapté à la voie de restitution à laquelle appartient ledit dispositif de restitution audio. Les équipements reproduisent alors chacun leur(s) flux audio traité(s) dédié(s), sans y appliquer de traitement supplémentaire.

L'élément maître peut être situé dans diverses entités, par exemple dans un service de diffusion situé dans le *cloud,* ou bien dans un ou plusieurs équipements tels qu'un récepteur audio situé sur le réseau local, une enceinte, un appareil tenant ou non le rôle d'enceinte (par exemple un boîtier décodeur vidéonumérique), etc.

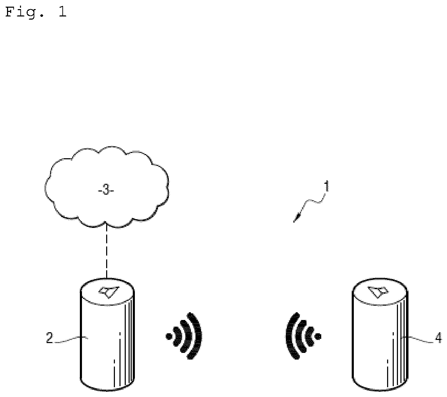

Le système audio 1 de la figure 1 comporte une enceinte connectée 2 qui acquiert un flux audio d'entrée provenant d'un service de diffusion 3 du *cloud.* L'enceinte connectée 2 reproduit l'une des voies audio, et est en charge de retransmettre, par exemple via une liaison sans fil (Wi-Fi, *Bluetooth,* ...), le flux audio d'entrée vers une seconde enceinte connectée 4, qui va reproduire l'autre voie. Les enceintes connectées 2 et 4 sont synchronisées entre elles par des moyens connus.

Dans le cas où l'invention n'est pas mise en oeuvre, les enceintes connectées 2 et 4 doivent toutes deux, lorsqu'elles sont configurées pour le rendu synchronisé d'un même flux audio d'entrée, appliquer des paramètres d'égalisation au flux audio d'entrée à reproduire. Ceci nécessite donc des capacités d'application d'égalisation à la fois dans l'enceinte connectée 2 et dans l'enceinte connectée 4.

Avec la présente invention, un élément sera considéré comme « élément maitre ». Cet élément maître est en charge d'appliquer les paramètres d'égalisation souhaités en lieu et place des enceintes.

L'élément maître peut être intégré dans l'enceinte connectée 2. L'enceinte connectée 2 applique les égalisations et effets pour sa propre voie de restitution, mais aussi pour la voie de restitution de l'enceinte connectée 4. Dans ce cas, l'enceinte connectée 4 peut être un modèle moins évolué, ne nécessitant pas d'être capable d'appliquer des traitements sonores. L'enceinte connectée 2 sera donc munie d'un processeur plus puissant et/ou d'un DSP (pour *Digital Signal Processor),* alors que l'enceinte connectée 4 pourra avoir un processeur moins puissant et/ou ne pas avoir de DSP, ce qui réduira le coût de l'enceinte connectée 4.

Alternativement, l'élément maître pourrait être situé dans le service de diffusion 3. L'élément maître a connaissance du modèle de l'enceinte connectée 2 et du modèle de l'enceinte connectée 4, et applique directement les traitements souhaités sur le flux audio d'entrée pour une reproduction optimale dans une configuration stéréo reproduite par des enceintes de même modèle que les enceintes connectées 2 et 4. Les enceintes connectées 2 et 4 n'ont donc pas à appliquer elles-mêmes de traitements au signal sonore, et peuvent donc toutes deux être des modèles plus simples (et plus anciens et moins coûteux).

On décrit maintenant l'invention de manière plus détaillée.

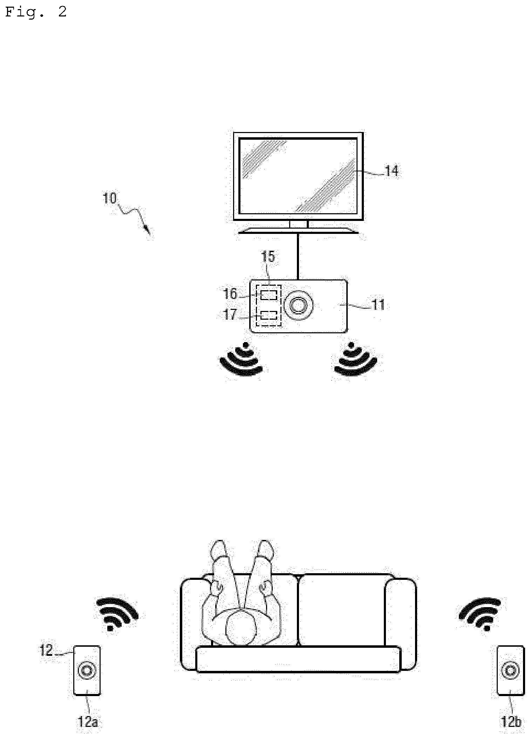

En référence à la figure 2, un système audio 10 comporte une pluralité d'équipements, en l'occurrence un boîtier décodeur 11 et deux enceintes externes 12 : une enceinte externe gauche 12a et une enceinte externe droite 12b.

Le boîtier décodeur 11 est situé devant la position prévue pour l'utilisateur (et à peu près en face), alors que l'enceinte externe gauche 12a est située derrière et à gauche de l'utilisateur, et l'enceinte externe droite 12b est située derrière et à droite de l'utilisateur.

Le boîtier décodeur 11 comprend une sortie vidéo connectée à un écran 14.

Le boîtier décodeur 11 comprend de plus des moyens de communication par lesquels il est relié aux deux enceintes externes 12. Les moyens de communication mettent en oeuvre une liaison sans fil en utilisant ici un protocole Wi-Fi. On note que la liaison pourrait être une autre liaison sans fil (par exemple une liaison *Bluetooth*)*,* ou bien une liaison filaire.

La pluralité d'équipements du système audio 10 intègre des dispositifs de restitution audio comprenant chacun un haut-parleur, les dispositifs de restitution audio formant une pluralité de voies de restitution.

Les « voies de restitution » sont les sorties audios adressables, pouvant recevoir un signal audio dédié à cette seule sortie.

Une enceinte externe monophonique est considérée comme une seule voie de restitution. Une enceinte externe stéréophonique est considérée comme deux voies de restitution.

Chaque enceinte externe 12 comprend ici un unique dispositif de restitution audio comprenant un haut-parleur. Le dispositif de restitution audio de l'enceinte externe gauche 12a forme donc une (seule) voie de restitution gauche et le dispositif de restitution audio de l'enceinte externe droite 12b forme donc une (seule) voie de restitution droite.

Le boîtier décodeur 11, quant à lui, est doté ici de capacités de reproduction sonore. Cela signifie qu'il comporte au moins un dispositif de restitution audio et donc au moins un haut-parleur, et qu'il est à minima capable de reproduction monophonique. Le boîtier décodeur 11 peut aussi être capable de reproduire un flux multicanaux (tel que par exemple un flux 5.1), voire de reproduire un flux multicanaux avec prise en compte de l'élévation (tel que par exemple un flux de type *Dolby Atmos* avec une configuration 5.1.2).

Ici, le boîtier décodeur 11 est capable de reproduire un flux multicanaux et comprend donc N (N>1) dispositifs de restitution audio comprenant chacun un haut-parleur. Le boîtier décodeur 11 est capable d'envoyer un signal différent à chacun de ses N haut-parleurs, de sorte que l'on considère que les N dispositifs de restitution audio du boîtier décodeur 11 forment N voies de restitution appelées ici voies de restitution avant.

Le boîtier décodeur 11 comporte de plus un ou plusieurs composants de traitement qui mettent en oeuvre un dispositif de traitement 15 qui comprend un élément maître 16 et un élément configurateur 17. Les composants de traitement sont adaptés à exécuter des instructions d'un programme pour mettre en oeuvre les étapes du procédé de traitement qui vont être décrites ci-après. Les composants de traitement comprennent par exemple un ou plusieurs composants parmi les composants suivants : processeur, microcontrôleur, circuit logique programmable tel qu'un FPGA (pour *Field Programmable Gate Arrays)* ou un ASIC (pour *Application Spécifie Integrated Circuit*).

On décrit tout d'abord la fonction de l'élément maître 16.

Le boîtier décodeur 11 acquiert un flux entrant qui peut être un flux audiovisuel ou bien un flux ne comprenant que des composantes audio.

Le flux entrant peut être un flux entrant externe provenant d'une source externe : réseau local, satellite, câble, DVB-T (pour *Digital Video Broadcasting-Terrestrial*), xDSL (qui peut s'interpréter par « ligne d'accès numérique »), etc. Le flux entrant peut aussi être un flux entrant interne provenant d'une source interne au boîtier décodeur 11, par exemple d'un disque dur de type HDD (pour *Hard Disk Drive) .*

Le boîtier décodeur 11 extrait un flux audio d'entrée du flux entrant : soit le flux audio d'entrée est un flux séparé, distinct, et l'extraction consiste uniquement à acquérir le flux audio d'entrée, soit le boîtier décodeur 11 réalise un démultiplexage pour obtenir le flux audio d'entrée.

L'élément maître 16 acquiert le flux audio d'entrée, et applique sur le flux audio d'entrée des traitements adaptés à chaque voie de restitution, de manière à produire des flux audios traités adaptés chacun à l'une des voies de restitution. L'élément maître 16 transmet alors à l'enceinte externe gauche 12a le flux audio traité qui lui est dédié et à l'enceinte externe droite 12b le flux audio traité qui lui est dédié.

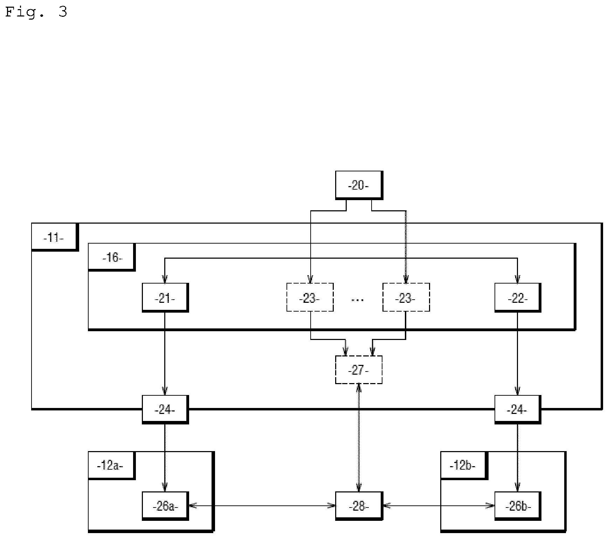

Plus précisément, en référence à la figure 3, l'élément maître 16 du boîtier décodeur 11 acquiert le flux audio d'entrée 20, et met en oeuvre une pluralité de chaînes de traitements : une chaîne de traitements gauche 21 adaptée à la voie de restitution gauche (de l'enceinte externe gauche 12a), une chaîne de traitements droite 22 adaptée à la voie de restitution droite (de l'enceinte externe droite 12b), et N chaînes de traitements avant 23 adaptées aux voies de restitution avant (du boîtier décodeur 11). Les chaînes de traitements sont associées et adaptées chacune à une voie de restitution distincte.

Chaque chaîne de traitements comprend une succession de plusieurs traitements et forme un « pipeline » à plusieurs étages.

Les traitements adaptés à chaque voie de restitution et mis en oeuvre dans chaque chaîne de traitements comprennent tout d'abord, pour chaque chaîne de traitements, la création d'un flux audio particulier adapté à ladite voie de restitution. La création des flux audio particuliers consiste à recalculer les canaux cibles en fonction des canaux sources.

Chaque flux audio particulier est alors traité dans sa chaîne de traitements et subit tous ou certain(s) des traitements suivants pour produire les effets souhaités adaptés à la voie de restitution associée : égalisation, ajustement dynamique de gain, ajustement de volume relatif, traitement des basses, etc. On obtient ainsi un flux audio traité à partir de chaque flux audio particulier.

L'égalisation consiste par exemple à augmenter les niveaux de basses fréquences des flux audio transmis aux dispositifs de restitution audio si leurs performances sont limitées dans les basses fréquences. L'ajustement dynamique peut être un ajustement en fonction à la fois du niveau du signal audio contenu dans le flux audio d'entrée et de caractéristiques acoustiques des dispositifs de restitution audio.

Les flux audio traités comprennent donc un flux audio traité gauche adapté à la voie de restitution gauche, un flux audio traité droite adapté à la voie de restitution droite, et N flux audio traités avant adaptés chacun à l'une des voies de restitution avant.

Le flux audio traité gauche et le flux audio traité droite sont ensuite encodés (par exemple au format *Opus*) ou utilisés sans encodage (échantillons PCM, pour *Pulse Code Modulation*)*,* et sont transmis par l'élément maître 16 respectivement à l'enceinte externe gauche 12a et à l'enceinte externe droite 12b (et donc à leur dispositif de restitution audio respectif).

La transmission utilise les moyens de communication 24 du boîtier décodeur 11 qui permettent de connecter le boîtier décodeur 11 à l'enceinte externe gauche 12a et à l'enceinte externe droite 12b.

Les flux audio traités avant sont transmis en interne dans le boîtier décodeur 11 par l'élément maître 16 aux dispositifs de restitution 27 du boîtier décodeur 11.

L'enceinte externe gauche 12a, l'enceint externe droite 12b et le boîtier décodeur 11 procèdent alors à la lecture sonore et donc à la restitution des flux audio traités. L'enceinte connectée gauche 12a utilise pour cela son dispositif de restitution 26a, l'enceinte connectée droite 12b utilise pour cela son dispositif de restitution 26b, et le boîtier décodeur 11 utilise pour cela ses dispositifs de restitution 27.

Les lectures sonores sont synchronisées, via des moyens de synchronisation 28 connus, avec la lecture vidéo réalisée par le boîtier décodeur 11 via l'écran 14, afin de s'assurer de la cohérence de la reproduction entre l'image et le son.

On note que, sur la figure 3, les cases 23 et 27 sont représentées en pointillés pour illustrer le fait que le boîtier décodeur 11 pourrait parfaitement intégrer l'élément maître 16 sans pour autant posséder de capacités de restitution audio.

Comme on l'a vu, l'élément maître 16 produit des flux audios traités qui sont adaptés chacun à l'une des voies de restitution.

Il convient de s'assurer que l'enceinte externe gauche 12a et l'enceinte externe droite 12b n'appliquent pas de traitement non souhaité (par exemple lorsqu'elles ne connaissent pas la configuration spatiale réelle) et, en particulier, ne réalisent pas de traitement susceptible de mélanger les flux audio traités ou de modifier la spatialisation obtenue suite aux traitements réalisés par l'élément maître 16. Les enceintes externes ne doivent pas réaliser de traitement susceptible d'affecter la séparation des canaux, et ne doivent pas reproduire de traitements déjà réalisés par l'élément maître 16.

Le flux audio traité gauche et le flux audio traité droite sont configurés à cet effet par l'élément maître 16.

La configuration d'un flux audio traité peut consister à lui associer un message spécifique ou une commande dédiée, pour indiquer à l'enceinte externe 12 de ne pas « traiter » le son. Il s'agit du moyen le plus fiable, mais il n'est pas forcément possible de mettre en oeuvre ce moyen : la commande n'existe pas forcément, en particulier s'il s'agit d'enceintes non initialement prévues pour ce cas d'utilisation.

La configuration du flux audio traité peut consister à le transmettre en mode double canal, (*dual channel* en anglais).

Le mode double canal a en effet généralement une sémantique signifiant que les contenus des deux voies (gauche/droite) sont indépendants et ne doivent pas être mélangés.

Le mode double canal est utilisé classiquement pour gérer les cas où les voies de restitution (canaux) de contenus sémantiquement différents sont véhiculés simultanément, sans pour autant être des canaux stéréo. C'est par exemple le cas lorsqu'un premier canal contient de la parole dans une première langue, et qu'un second canal contient de la parole dans une seconde langue différente de la première. Ces deux canaux, bien que véhiculés de manière simultanée, sont destinés à être considérés différemment d'une transmission stéréo.

Le mode double canal est par exemple disponible dans les formats de codage audio MPEG-1 (ISO/IEC 11172-3), MPEG-2 (ISO/IEC 13818-3 et 13818-7), et SBC (utilisé pour coder le son sur Bluetooth dans le profil AD2P).

L'utilisation du mode double canal permet d'assurer une transmission de deux voies de manière indépendante : aucun mixage de signaux audio et aucun traitement impactant la spatialisation ne sont mis en oeuvre par les enceintes et/ou décodeurs restituant un tel flux (contrairement par exemple au mode stéréo).

Le mode double canal est donc ici détourné de sa sémantique et de sa fonction initiale, pour s'assurer que les canaux sonores ne subissent pas de traitement ultérieur et de mélange susceptible d'affecter la spatialisation et/ou la séparation des canaux. Ainsi, il est possible de s'assurer que les enceintes externes 12a et 12b recevant deux voies de restitution n'appliquent pas de tels traitements supplémentaires.

Un avantage supplémentaire du mode double canal est que les encodeurs audionumériques, lorsqu'ils sont configurés dans ce mode, ne cherchent pas à exploiter, pour réaliser l'étape de compression, une quelconque redondance entre les canaux qui puisse affecter la séparation des canaux. Il est donc possible de s'assurer que l'éventuelle étape de compression utilisée afin de réaliser la transmission vers les enceintes externes préserve bien la pleine séparation des canaux.

En fonction des configurations souhaitées, le contenu double canal peut contenir deux voies différentes, ou deux fois la même voie.

La configuration du flux audio traité peut également consister à le transmettre en mode monophonique à chacune des enceintes externes 12a, 12b de la paire stéréo externe, au lieu de transmettre un flux stéréo aux enceintes. Dans ce cas, chacune des enceintes externes ne recevra que le flux audio traité qui lui est destiné, évitant ainsi que l'enceinte ne puisse appliquer un traitement sonore affectant la répartition des voies audio et susceptible de mélanger les flux audio traités ou de modifier la spatialisation.

L'utilisation de transmissions monophoniques peut être avantageuse dans le cas d'une paire d'enceintes externes capable de recevoir soit un flux stéréophonique, soit un flux monophonique pour chaque enceinte (donc deux flux monophoniques différents), mais n'étant pas capable de recevoir et/ou traiter correctement un flux double canal.

La configuration de chaque flux audio traité peut consister à le transmettre en mode stéréophonique, avec deux canaux véhiculant un même signal audio. La voie gauche et la voie droite sont identiques. Cette configuration est appelée mode double mono (*dual mono* en anglais) . Dans ce cas, chacune des enceintes externes reçoit un flux audio stéréophonique dont les deux canaux sont identiques, ledit flux étant dédié à ladite enceinte. Ceci peut s'avérer avantageux si les capacités des enceintes externes ne permettent ni l'utilisation de mode double canal, ni l'utilisation de mode monophonique. Dans ce cas, même si l'enceinte tentait d'appliquer un traitement affectant la séparation des canaux, ce traitement serait ineffectif, les deux canaux étant identiques.

Les paramètres des chaînes de traitements dépendent bien sûr de la configuration spatiale des différents dispositifs de restitution, mais aussi de leurs caractéristiques, en particulier au niveau de leurs capacités de rendu sonore.

On rappelle que le système audio 10 dont il est ici question comprend le boîtier décodeur 11, qui est capable de reproduire du son multicanaux, ainsi que deux enceintes externes arrière 12.

Si les enceintes externes 12 sont des enceintes dont les capacités de reproduction sonore sont faibles dans les basses fréquences (c'est par exemple souvent le cas pour les enceintes destinées principalement à être utilisées en voies arrière), alors la voie dédiée aux basses fréquences (le canal LFE, pour *Low-Frequency Effects*) sera reproduite par le haut-parleur de graves du boîtier décodeur 11.

Si par contre les enceintes externes 12 sont des enceintes plus qualitatives, avec de bonnes capacités de reproduction de graves, il est souhaitable de leur faire reproduire la voie LFE en lieu et place du boîtier décodeur 11 (qui dispose d'un volume physique plus limité pour reproduire les basses fréquences). Dans ce cas, la voie du signal source sera mixée avec les voies arrière pour créer les signaux destinés aux enceintes externes arrière 12, afin que les basses fréquences soient reproduites par ces enceintes.

Il est par exemple aussi possible que le boîtier décodeur 11, qui a des capacités de reproduction sonore, ait été initialement utilisé seul par l'utilisateur, et que l'utilisateur ait ajouté par la suite des enceintes additionnelles, qui sont les enceintes externes 12. Les chaînes de traitements mises en oeuvre sont bien sûr différentes dans le cas où le boîtier décodeur 11 est utilisé seul (toutes les voies sources sont alors restituées, après traitement, par le boîtier décodeur 11) et dans le cas où le boîtier décodeur 11 est utilisé conjointement avec la paire d'enceintes externes 12.

Il est donc nécessaire de configurer les chaînes de traitements : c'est le rôle de l'élément configurateur 17.

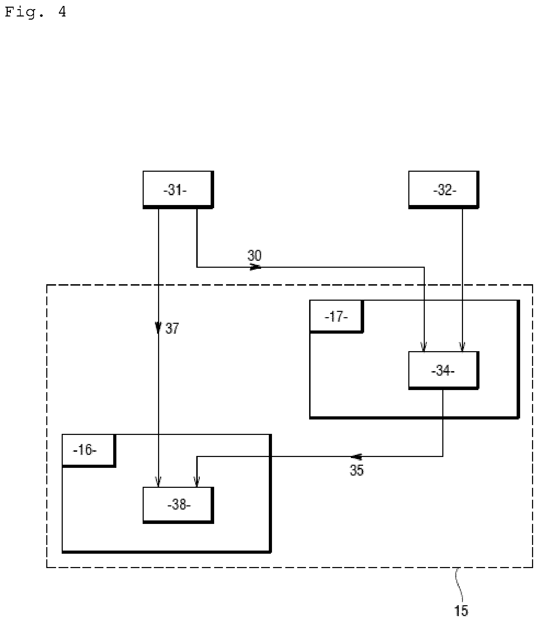

En référence à la figure 4, l'élément configurateur 17 acquiert des paramètres d'entrée comprenant des premières caractéristiques 30 du flux audio d'entrée 31 et des deuxièmes caractéristiques 32 des dispositifs de restitution audio. Des moyens d'analyse 34 de l'élément configurateur 17 analysent les paramètres d'entrée et produisent des paramètres de configuration 35 à partir des paramètres d'entrée.

Les premières caractéristiques 30 du flux audio d'entrée 31 comprennent un nombre de voies sources du flux audio d'entrée 31 et une configuration spatiale du flux audio d'entrée 31.

Les deuxièmes caractéristiques 32 des dispositifs de restitution audio comprennent des informations de restitution relatives à des capacités acoustiques des dispositifs de restitution audio et à une configuration spatiale des voies de restitution.

L'élément maître 16 acquiert alors, en plus d'échantillons sonores 37 du flux audio d'entrée 31, les paramètres de configuration 35, et définit à partir des paramètres de configuration 35 les différentes chaînes de traitements 38. Les paramètres de configuration 35 peuvent comprendre des paramètres utilisés dans les chaînes de traitements 38. Alternativement, les paramètres de configuration 35 peuvent désigner les traitements à réaliser dans les différentes chaînes de traitements 38 : c'est alors l'élément configurateur 17 qui sélectionne les chaînes de traitements 38, et l'élément maître 16 qui les met en oeuvre.

L'élément configurateur 17 peut acquérir les informations de restitution associées aux dispositifs de restitution audio des enceintes externes 12 via des messages dédiés émis par les enceintes externes 12. L'élément configurateur 17 peut aussi acquérir les informations de restitution associées aux dispositifs de restitution audio des enceintes externes 12 via une interface de programmation applicative (API) coopérant avec une base de données préremplie. L'API permet de connaître le modèle des enceintes externes 12, et la base de données préremplie comprend des informations sur les modèles d'enceinte. Ces informations peuvent aussi être obtenues par l'élément configurateur 17 depuis l'élément maître 16 qui relaiera les informations sur les dispositifs de restitution audio dont il gère les chaînes de traitements.

Dans l'exemple qui vient d'être décrit, l'ensemble du dispositif de traitement 15, c'est-à-dire l'élément maître 16 et l'élément configurateur 17, est intégré dans le même équipement physique (le boîtier décodeur 11 en l'occurrence).

Ce n'est pas nécessairement le cas. L'élément maître 16 et l'élément configurateur 17 pourraient être intégrés dans deux équipements physiques différents. On peut avoir dans le système audio deux équipements distincts comprenant un équipement maître dans lequel est mis en oeuvre l'élément maître 16 et un équipement configurateur dans lequel est mis en oeuvre l'élément configurateur 17.

Par exemple, l'élément configurateur 17 pourrait être intégré dans un boîtier décodeur (qui est alors l'équipement configurateur), et l'élément maître 16 dans une enceinte externe connectée dotée de capacités suffisantes de traitement (l'enceinte connectée est alors l'équipement maître). On réduit ainsi la charge processeur nécessaire dans le boîtier décodeur.

Il est aussi possible que l'élément maître 16 soit réparti dans plusieurs équipements. On a alors plusieurs éléments maîtres 16. On a ainsi au moins deux équipements distincts comprenant au moins deux équipements maîtres dans chacun desquels est mis en oeuvre un élément maître 16.

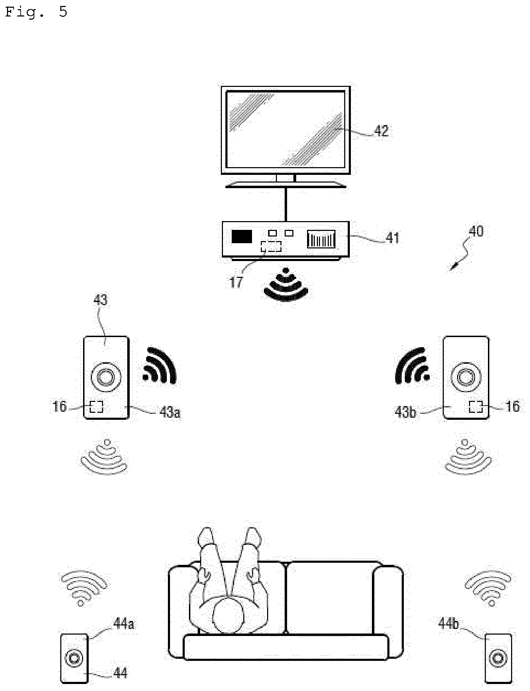

En référence à la figure 5, le système audio 40 comporte un boîtier décodeur 41 relié à un écran 42, ainsi que deux enceintes connectées 43 et deux enceintes d'appoint 44.

Le boîtier décodeur 41 ne comporte pas de dispositif de restitution audio (et donc pas de haut-parleur), et possède de faibles capacités de traitement.

Le boîtier décodeur 41 est relié en Wi-Fi à une enceinte connectée gauche 43a et à une enceinte connectée droite 43b, qui font office de voies avant. L'enceinte connectée gauche 43a est reliée en *Bluetooth* à une enceinte d'appoint gauche 44a. L'enceinte connectée droite 43b est reliée en *Bluetooth* à une enceinte d'appoint droite 44b. L'enceinte d'appoint gauche 44a et l'enceinte d'appoint droite 44b font office de voies arrières.

Ici, l'élément configurateur 17 est situé dans le boîtier décodeur 41. Les deux enceintes connectées 43 remplissent la fonction d'élément maître, ce qui permet de réduire la charge processeur du boîtier décodeur 41. Les deux enceintes connectées 43 sont donc deux équipements maîtres.

L'enceinte connectée gauche 43a va donc prendre en charge les chaînes de traitements pour les deux enceintes de gauche, c'est-à-dire pour l'enceinte connectée gauche 43a et l'enceinte d'appoint gauche 44a. L'enceinte connectée droite 43b va donc prendre en charge les chaînes de traitements pour les deux enceintes de droite, c'est-à-dire pour l'enceinte connectée droite 43b et l'enceinte d'appoint droite 44b.

L'ensemble des enceintes, utilisant ici des protocoles différents, seront synchronisées par des moyens connus.

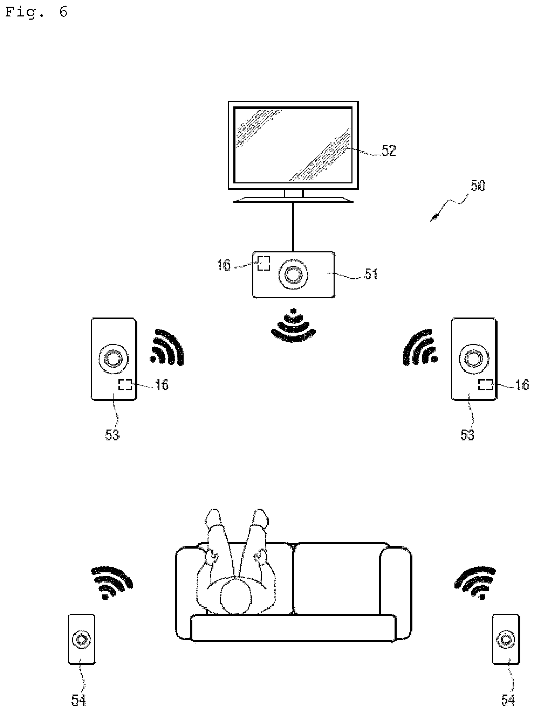

En référence à la figure 6, un système audio 50 comporte à nouveau un boîtier décodeur 51 relié à un écran 52, deux enceintes connectées 53 et deux enceintes connectées 54.

Le boîtier décodeur 51 est muni de haut-parleurs et reçoit le flux audio d'entrée. Le boîtier décodeur 51 est relié en Wi-Fi aux deux enceintes connectées 53 faisant office de voies avant. Les deux enceintes connectées 53 sont dotées de capacités de traitement avancées. Le boîtier décodeur 51 est également relié en Wi-Fi aux deux autres enceintes connectées 54 faisant office de voies arrière, et n'ayant que de faibles capacités de traitement.

Dans cette configuration, le boîtier décodeur 51 va gérer les chaînes de traitements pour lui-même et pour les enceintes connectées 54, tandis que les enceintes connectées 53 géreront chacune leur propre chaîne de traitements. De cette façon, les ressources de traitement du boîtier décodeur 51 sont préservées autant que possible, afin de pouvoir éventuellement les employer pour d'autres usages (par exemple pour mettre en oeuvre une interface graphique avancée).

On a donc dans cette configuration trois éléments maîtres 16, traitant chacun une partie des voies de restitution. Les trois équipements maîtres sont le boîtier décodeur 51 et les enceintes connectées 53.

Bien entendu, l'invention n'est pas limitée au mode de réalisation décrit mais englobe toute variante entrant dans le champ de l'invention telle que définie par les revendications.

## Revendications

1. Dispositif de traitement (15) d'un flux audio d'entrée (31), agencé pour être intégré dans un système audio comportant une pluralité d'équipements intégrant des dispositifs de restitution audio comprenant chacun un haut-parleur, les dispositifs de restitution audio étant agencés pour former une pluralité de voies de restitution, le dispositif de traitement (15) comportant :
- un élément configurateur (17) agencé pour acquérir des paramètres d'entrée comprenant des premières caractéristiques (30) du flux audio d'entrée et des deuxièmes caractéristiques (32) des dispositifs de restitution audio, et pour produire des paramètres de configuration (35) à partir des paramètres d'entrée ;
- un élément maître (16) agencé pour acquérir le flux audio d'entrée ainsi que les paramètres de configuration (35), pour définir à partir des paramètres de configuration et appliquer sur le flux audio d'entrée des chaînes de traitements (21, 22, 23) associées et adaptées chacune à une voie de restitution, de manière à produire des flux audios traités adaptés chacun à l'une des voies de restitution et définissant une spatialisation, et pour transmettre à chaque équipement comprenant un dispositif de restitution audio le flux audio traité adapté à la voie de restitution à laquelle appartient ledit dispositif de restitution audio, **caractérisé en ce que** les flux audio traités sont configurés par l'élément maître pour que les équipements qui reçoivent de l'élément maître les flux audio traités ne réalisent pas de traitement susceptible de mélanger lesdits flux audio traités ou de modifier la spatialisation,
la configuration de chaque flux audio traité consistant à le transmettre en mode double canal, le flux audio traité étant dans un format dans lequel le mode double canal est disponible, tel que MPEG-1 ou MPEG-2 ou SBC.
ou
la configuration de chaque flux audio traité consistant à le transmettre en mode stéréophonique avec deux canaux véhiculant un même signal audio.

2. Dispositif de traitement selon la revendication 1, dans lequel la chaîne de traitements associée et adaptée à une voie de restitution met en oeuvre des traitements comprenant la création d'un flux audio particulier adapté à ladite voie de restitution, et/ou une égalisation et/ou un ajustement dynamique d'un gain et/ou un ajustement d'un volume relatif mis en oeuvre sur le flux audio particulier pour produire le flux audio traité adapté à ladite voie de restitution.

3. Dispositif de traitement selon l'une des revendications précédentes, dans lequel les premières caractéristiques du flux audio d'entrée comprennent un nombre de voies sources du flux audio d'entrée et une configuration spatiale du flux audio d'entrée.

4. Dispositif de traitement selon l'une des revendications précédentes, dans lequel les deuxièmes caractéristiques des dispositifs de restitution audio comprennent des informations de restitution relatives à des capacités acoustiques des dispositifs de restitution audio et à une configuration spatiale des voies de restitution.

5. Dispositif de traitement selon la revendication 4, dans lequel les informations de restitution sont acquises par l'élément configurateur (17) via une interface de programmation applicative coopérant avec une base de données préremplie, ou via une réception de messages dédiés émis par les équipements intégrant lesdits dispositifs de restitution audio, ou bien sont transmises à l'élément configurateur (17) par l'élément maître (16).

6. Equipement comprenant un dispositif de traitement (15) selon l'une des revendications précédentes.

7. Equipement selon la revendication 6, l'équipement étant un boîtier décodeur (11).

8. Système audio comportant une pluralité d'équipements intégrant des dispositifs de restitution audio comprenant chacun un haut-parleur, le système audio comprenant un dispositif de traitement (15) selon l'une des revendications 1 à 5, qui est mis en oeuvre par au moins deux équipements distincts.

9. Système audio selon la revendication 8, dans lequel les au moins deux équipements distincts comprennent un équipement maître dans lequel est mis en oeuvre l'élément maître (16) et un équipement configurateur dans lequel est mis en oeuvre l'élément configurateur (17).

10. Système audio selon la revendication 8, dans lequel les au moins deux équipements distincts comprennent au moins deux équipements maître (43 ; 51, 53) dans chacun desquels est mis en oeuvre un élément maître (16).

11. Procédé de traitement mis en oeuvre dans un dispositif de traitement selon l'une des revendications 1 à 5, et comprenant les étapes de :
- acquérir des paramètres d'entrée comprenant des premières caractéristiques (30) du flux audio d'entrée et des deuxièmes caractéristiques (31) des dispositifs de restitution audio, et produire des paramètres de configuration (35) à partir des paramètres d'entrée ;
- acquérir le flux audio d'entrée ainsi que les paramètres de configuration (35), définir à partir des paramètres de configuration et appliquer sur le flux audio d'entrée des chaînes de traitements (21, 22, 23) associées et adaptées chacune à une voie de restitution, de manière à produire des flux audios traités adaptés chacun à l'une des voies de restitution, et transmettre à chaque équipement comprenant un dispositif de restitution audio le flux audio traité adapté à la voie de restitution à laquelle appartient ledit dispositif de restitution audio.

12. Programme d'ordinateur comprenant des instructions qui conduisent le dispositif de traitement selon l'une des revendications 1 à 5 à exécuter les étapes du procédé de traitement selon la revendication 11.

13. Support d'enregistrement lisible par ordinateur, sur lequel est enregistré le programme d'ordinateur selon la revendication 12.

14. Système audio, comportant une pluralité d'équipements intégrant des dispositifs de restitution audio comprenant chacun un haut-parleur, les dispositifs de restitution audio étant agencés pour former une pluralité de voies de restitution, le système audio comprenant un dispositif de traitement (15) d'un flux audio d'entrée (31), le dispositif de traitement (15) comportant :
- un élément configurateur (17) agencé pour acquérir des paramètres d'entrée comprenant des premières caractéristiques (30) du flux audio d'entrée et des deuxièmes caractéristiques (32) des dispositifs de restitution audio, et pour produire des paramètres de configuration (35) à partir des paramètres d'entrée ;
- un élément maître (16) agencé pour acquérir le flux audio d'entrée ainsi que les paramètres de configuration (35), pour définir à partir des paramètres de configuration et appliquer sur le flux audio d'entrée des chaînes de traitements (21, 22, 23) associées et adaptées chacune à une voie de restitution, de manière à produire des flux audios traités adaptés chacun à l'une des voies de restitution et définissant une spatialisation, et pour transmettre à chaque équipement du système audio, comprenant un dispositif de restitution audio, le flux audio traité adapté à la voie de restitution à laquelle appartient ledit dispositif de restitution audio, les flux audio traités étant configurés par l'élément maître, **caractérisé en ce que** les équipements du système audio sont agencés pour fonctionner selon un premier mode, dans lequel ils réalisent des traitements susceptibles de mélanger lesdits flux audio traités ou de modifier la spatialisation, et selon un second mode, dans lequel ils ne réalisent pas lesdits traitements, la configuration de chaque flux audio traité consistant à lui associer un message spécifique ou une commande dédiée, le message spécifique ou la commande dédiée étant tel que lesdits équipements le recevant fonctionnent selon le deuxième mode.

## Patentansprüche

1. Verarbeitungsvorrichtung (15) zur Verarbeitung eines Eingangsaudiostroms (31), die ausgebildet ist, in ein Audiosystem integriert zu werden, das eine Vielzahl von Ausrüstungen umfasst, in die Audiowiedergabevorrichtungen integriert sind, die jeweils einen Lautsprecher umfassen, wobei die Audiowiedergabevorrichtungen ausgebildet sind, eine Vielzahl von Wiedergabekanälen zu bilden, wobei die Verarbeitungsvorrichtung (15) umfasst:
- ein Konfigurationselement (17), das ausgebildet ist, Eingangsparameter zu erfassen, die erste Charakteristika (30) des Eingangsaudiostroms und zweite Charakteristika (32) der Audiowiedergabevorrichtungen umfassen, und Konfigurationsparameter (35) anhand der Eingangsparameter zu erzeugen;
- ein Master-Element (16), das ausgebildet ist, den Eingangsaudiostrom sowie die Konfigurationsparameter (35) zu erfassen, um anhand der Konfigurationsparameter Verarbeitungsketten (21, 22, 23) zu definieren und auf den Eingangsaudiostrom anzuwenden, wobei die Verarbeitungsketten jeweils einem Wiedergabekanal zugeordnet und an diesen angepasst sind, um verarbeitete Audioströme zu erzeugen, die jeweils an einen der Wiedergabekanäle angepasst sind und eine Verräumlichung definieren, und an jede Ausrüstung, die eine Audiowiedergabevorrichtung umfasst, den verarbeiteten Audiostrom zu übertragen, der an den Wiedergabekanal angepasst ist, zu dem die Audiowiedergabevorrichtung gehört, **dadurch gekennzeichnet, dass** die verarbeiteten Audioströme durch das Master-Element so konfiguriert werden, dass die Ausrüstungen, die die verarbeiteten Audioströme von dem Master-Element empfangen, keine Verarbeitung durchführen, die die genannten verarbeiteten Audioströme mischen könnte oder die Verräumlichung modifizieren könnte, wobei die Konfiguration jedes verarbeiteten Audiostroms darin besteht, ihn in einem Zweikanalmodus zu übertragen, wobei der verarbeitete Audiostrom in einem Format ist, in dem der Zweikanalmodus verfügbar ist, wie MPEG-1 oder MPEG-2 oder SBC,
oder
wobei die Konfiguration jedes verarbeiteten Audiostroms darin besteht, ihn in einem Stereomodus zu übertragen, mit zwei Kanälen, die ein selbes Audiosignal übertragen.

2. Verarbeitungsvorrichtung nach Anspruch 1, bei der die Verarbeitungskette, die einem Wiedergabekanal zugeordnet und an diesen angepasst ist, Verarbeitungen durchführt, die die Erzeugung eines besonderen Audiostroms umfassen, der an den genannten Wiedergabekanal angepasst ist, und/oder eine Entzerrung und/oder eine dynamische Anpassung einer Verstärkung und/oder eine Anpassung eines relativen Volumens, die an dem besonderen Audiostrom durchgeführt wird, um den verarbeiteten Audiostrom zu erzeugen, der an den genannten Wiedergabekanal angepasst ist.

3. Verarbeitungsvorrichtung nach einem der vorhergehenden Ansprüche, bei der die ersten Charakteristika des Eingangsaudiostroms eine Anzahl von Quellkanälen des Eingangsaudiostroms und eine räumliche Konfiguration des Eingangsaudiostroms umfassen.

4. Verarbeitungsvorrichtung nach einem der vorhergehenden Ansprüche, bei dem die zweiten Charakteristika der Audiowiedergabevorrichtungen Wiedergabeinformationen bezüglich der akustischen Fähigkeiten der Audiowiedergabevorrichtungen und bezüglich einer räumlichen Konfiguration der Wiedergabekanäle umfassen.

5. Verarbeitungsvorrichtung nach Anspruch 4, bei der die Wiedergabeinformationen von dem Konfigurationselement (17) über eine Anwendungsprogrammierschnittstelle erfasst werden, die mit einer vorgefüllten Datenbank zusammenwirkt, ober über ein Empfangen von dedizierten Nachrichten, die von den Ausrüstungen, in denen die genannten Audiowiedergabevorrichtungen integriert sind, emittiert werden, oder von dem Master-Element (16) an das Konfigurationselement (17) übertragen werden.

6. Ausrüstung, umfassend eine Verarbeitungsvorrichtung (15) nach einem der vorhergehenden Ansprüche.

7. Ausrüstung nach Anspruch 6, wobei die Ausrüstung eine Set-Top-Box (11) ist.

8. Audiosystem, umfassend eine Vielzahl von Ausrüstungen, in die Audiowiedergabevorrichtungen integriert sind, die jeweils einen Lautsprecher umfassen, wobei das Audiosystem eine Verarbeitungsvorrichtung (15) nach einem der Ansprüche 1 bis 5 umfasst, die von mindestens zwei verschiedenen Ausrüstungen implementiert wird.

9. Audiosystem nach Anspruch 8, bei dem die mindestens zwei verschiedenen Ausrüstungen eine Master-Ausrüstung umfassen, in der das Master-Element (16) implementiert ist, und eine Konfigurationsausrüstung, in der das Konfigurationselement (17) implementiert ist.

10. Audiosystem nach Anspruch 8, bei dem die mindestens zwei verschiedenen Ausrüstungen mindestens zwei Master-Ausrüstungen (43; 51, 53) umfassen, in denen jeweils ein Master-Element (16) implementiert ist.

11. Verarbeitungsverfahren, das in einer Verarbeitungsvorrichtung nach einem der Ansprüche 1 bis 5 durchgeführt wird, und umfassend die Schritte:
- Erfassen der Eingangsparameter, die erste Charakteristika (30) des Eingangsaudiostroms und zweite Charakteristika (31) der Audiowiedergabevorrichtungen umfassen, und Erzeugen von Konfigurationsparametern (35) anhand der Eingangsparameter;
- Erfassen des Eingangsaudiostroms sowie der Konfigurationsparameter (35), Definieren von Verarbeitungsketten (21, 22, 23) anhand der Konfigurationsparameter und Anwenden der Verarbeitungsketten auf den Eingangsaudiostrom, wobei die Verarbeitungsketten jeweils einem Wiedergabekanal zugeordnet und daran angepasst sind, um verarbeitete Audioströme zu erzeugen, die jeweils an einen der Wiedergabekanäle angepasst sind, und Übertragen des verarbeiteten Audiostroms, der an den Wiedergabekanal angepasst ist, zu dem die genannte Audiowiedergabevorrichtung gehört, an jede Ausrüstung, die eine Audiowiedergabevorrichtung umfasst.

12. Computerprogramm, das Anweisungen umfasst, die die Verarbeitungsvorrichtung nach einem der Ansprüche 1 bis 5 veranlassen, die Schritte des Verarbeitungsverfahrens nach Anspruch 11 auszuführen.

13. Computerlesbarer Aufzeichnungsträger, auf dem das Computerprogramm nach Anspruch 12 gespeichert ist.

14. Audiosystem, umfassend eine Vielzahl von Ausrüstungen, in die Audiowiedervorrichtungen integriert sind, die jeweils einen Lautsprecher umfassen, wobei die Audiowiedergabevorrichtungen ausgebildet sind, eine Vielzahl von Wiedergabekanälen zu bilden, wobei das Audiosystem eine Verarbeitungsvorrichtung (15) zur Verarbeitung eines Eingangsaudiostroms (31) umfasst, wobei die Verarbeitungsvorrichtung (15) umfasst:
- ein Konfigurationselement (17), das ausgebildet ist, Eingangsparameter zu erfassen, die erste Charakteristika (30) des Eingangsaudiostroms und zweite Charakteristika (32) der Audiowiedergabevorrichtungen umfassen, und Konfigurationsparameter (35) anhand der Eingangsparameter zu erzeugen;
- ein Master-Element (16), das ausgebildet ist, den Eingangsaudiostrom sowie die Konfigurationsparameter (35) zu erfassen, um anhand der Konfigurationsparameter Verarbeitungsketten (21, 22, 23) zu definieren und auf den Eingangsaudiostrom anzuwenden, wobei die Verarbeitungsketten jeweils einem Wiedergabekanal zugeordnet und an diesen angepasst sind, um verarbeitete Audioströme zu erzeugen, die jeweils an einen der Wiedergabekanäle angepasst sind und eine Verräumlichung definieren, und an jede Ausrüstung des Audiosystems, die eine Audiowiedergabevorrichtung umfasst, den verarbeiteten Audiostrom zu übertragen, der an den Wiedergabekanal angepasst ist, zu dem die Audiowiedergabevorrichtung gehört, wobei die verarbeiteten Audioströme durch das Master-Element konfiguriert werden, **dadurch gekennzeichnet, dass** die Ausrüstungen des Audiosystems ausgebildet sind, gemäß einem ersten Modus zu funktionieren, in dem sie Verarbeitungen implementieren, die die genannten verarbeiteten Audioströme vermischen könnten oder die Verräumlichung modifizieren könnten,
und gemäß einem zweiten Modus, in dem sie die genannten Verarbeitungen nicht implementieren, wobei die Konfiguration jedes verarbeiteten Audiostroms darin besteht, ihm eine spezifische Nachricht oder einen dedizierten Befehl zuzuordnen, wobei die spezifische Nachricht oder der dedizierte Befehl derart ist, dass die sie empfangenden Ausrüstungen gemäß dem zweiten Modus funktionieren.

## Claims

1. A processor device (15) for processing an incoming audio stream (31), the processor device being arranged to be incorporated in an audio system comprising a plurality of pieces of equipment incorporating audio playback devices, each comprising a loudspeaker, the audio playback devices being arranged to form a plurality of playback channels, and the processor device (15) comprising:
a configuration element (17) arranged to acquire input parameters comprising both first characteristics (30) of the incoming audio stream and also second characteristics (32) of the audio playback devices, and to produce configuration parameters (35) on the basis of the input parameters;
a master element (16) arranged to acquire the incoming audio stream together with the configuration parameters, to define processing sequences (21, 22, 23) from the configuration parameters (35), each processing sequence being associated with and adapted to a respective playback channel, to apply the processing sequences to the incoming audio stream so as to produce processed audio streams, each adapted to a respective one of the playback channels and defining spatialization, and to transmit to each piece of equipment comprising an audio playback device the processed audio stream that is adapted to the playback channel associated with said audio playback device, **characterized in that** the processed audio streams are configured by the master element for ensuring that the pieces of equipment that receive the processed audio streams from the master element do not perform processing that could mix said processed audio streams or that could modify the spatialization,
wherein configuring each processed audio stream consists in transmitting it in dual channel mode, the processed audio stream being in a format in which the dual channel mode is available, such as MPEG-1 or MPEG-2 or SBC, or
wherein configuring each processed audio stream consists in transmitting it in stereo mode, with two channels conveying a same audio signal.

2. The processor device according to claim 1, wherein the processing sequence associated with and adapted to a playback channel performs processing that comprises creating a particular audio stream adapted to said playback channel, and/or applying equalization and/or dynamic gain adjustment and/or relative volume adjustment to that particular audio stream in order to produce the processed audio stream adapted to said playback channel.

3. The processor device according to any preceding claim, wherein the first characteristics of the incoming audio stream comprise a number of source channels of the incoming audio stream and a spatial configuration of the incoming audio stream.

4. The processor device according to any preceding claim, wherein the second characteristics of the audio playback devices comprise playback information about the acoustic capabilities of the audio playback devices and about the spatial configuration of the playback channels.

5. The processor device according to claim 4, wherein the playback information is acquired by the configuration element (17) via an application programming interface co-operating with a prefilled database, or by receiving dedicated messages issued by the pieces of equipment incorporating said audio playback devices, or else transmitted to the configuration element (17) by the master element (16).

6. Equipment including a processor device (15) according to any preceding claim.

7. The equipment according to claim 6, the equipment being a decoder box (11).

8. An audio system comprising a plurality of pieces of equipment incorporating audio playback devices, each comprising a loudspeaker, the audio system including a processor device (15) according to any one of claims 1 to 5, which device is implemented by at least two distinct pieces of equipment.

9. The audio system according to claim 8, wherein the at least two distinct pieces of equipment comprise a master equipment in which the master element (16) is implemented and a configuration equipment in which the configuration element (17) is implemented.

10. The audio system according to claim 8, wherein the at least two distinct pieces of equipment comprise at least two master pieces of equipment (43; 51, 53), with a respective master element (16) being implemented in each of them.

11. A processing method implemented in a processor device according to one of claims 1 to 5, and comprising the steps of:
acquiring input parameters comprising both first characteristics (30) of the incoming audio stream and also second characteristics (31) of the audio playback devices, and producing configuration parameters on the basis of the input parameters;
acquiring the incoming audio stream together with the configuration parameters (35), defining processing sequences (21, 22, 23) from the configuration parameters, each processing sequence being associated with and adapted to a respective playback channel, applying the processing sequences to the incoming audio stream so as to produce processed audio streams, each adapted to a respective one of the playback channels, and transmitting to each piece of equipment comprising an audio playback device the processed audio stream that is adapted to the playback channel associated with said audio playback device.

12. A computer program including instructions for causing the processor device according to any one of claims 1 to 5 to execute the steps of the processing method according to claim 11.

13. A computer readable storage medium having stored thereon the computer program according to claim 12.

14. An audio system, comprising a plurality of pieces of equipment incorporating audio playback devices, each comprising a loudspeaker, the audio playback devices being arranged to form a plurality of playback channels, the audio system comprising a processor device (15) for processing an incoming audio stream (31), the processor device (15) comprising:
a configuration element (17) arranged to acquire input parameters comprising both first characteristics (30) of the incoming audio stream and also second characteristics (32) of the audio playback devices, and to produce configuration parameters (35) on the basis of the input parameters;
a master element (16) arranged to acquire the incoming audio stream together with the configuration parameters (35), to define processing sequences from the configuration parameters, each processing sequence being associated with and adapted to a respective playback channel, to apply the processing sequences (21, 22, 23) to the incoming audio stream so as to produce processed audio streams, each adapted to a respective one of the playback channels and defining spatialization, and to transmit to each piece of equipment comprising an audio playback device the processed audio stream that is adapted to the playback channel associated with said audio playback device, the processed audio streams being configured by the master element,
**characterized in that** the pieces of equipment of the system are arranged to operate according to a first mode, in which they perform processing that could mix said processed audio streams or that could modify the spatialization, and according a second mode, in which they do not perform said processing,
wherein configuring each processed audio stream consists in associating it with a specific message or with a dedicated command, the specific message or the dedicated command being such that said pieces of equipment which receives it operate according to the second mode.
